# EUROPEAN PATENT APPLICATION

(11) **EP 1 406 150 A1**
(43) Date of publication of application: **07.04.2004**
(21) Application number: 02445120.5
(22) Date of filing: 01.10.2002
(51) Int. Cl.: G06F 3/00

(54) **Tactile feedback method and device and portable device incorporating same**

(71) Applicant: Sony Ericsson Mobile Communications AB, 221 88 Lund (SE)
(72) Inventor: Jönsson, Anders, 224 72 Lund (SE)
(74) Representative: Akerman, Marten Lennart

(57) **Abstract**

The invention relates to a tactile feedback method and device, and more particularly a method and mechanism for providing a user with a physical touch sensation when moving a cursor through a menu on a display, typically in a portable device such as a mobile telephone. The invention also relates such a portable device incorporating a tactile feedback device. Thus, the invention provides a method of providing tactile feedback in a portable device (1) comprising a display (2) for showing images including a movable cursor (4), and a pointing device (3), the pointing device being used for inputting signals to a control device guiding the cursor (4) on the display (2). A tactile sensation is generated when the cursor (4) is moved in a defined direction on the display (2). The tactile sensation device comprises a vibrator adapted to be controlled by the control device. The tactile feedback may be enhanced by combining with sounds and visible signals providing audible and visual feedback as well.

## Description

### Field of the invention

The present invention relates to a tactile feedback method and device, and more particularly a method and mechanism for providing a user with a physical touch sensation when moving a cursor through a menu on a display, typically in a portable device such as a mobile telephone. The invention also relates to such a portable device incorporating a tactile feedback device.

### State of the art

US 6,271,834 discloses a graphic user interface pointing device for use in a keyboard for a computer system including a joystick actuator, which is attached between pre-selected keys of a keyboard unit. The actuator comprises a ferromagnetic slag that is driven to make a tactile feedback that may be sensed by the user of the control input device.

Other mechanical switches like the so-called dome switches in which a metal plate snaps back and forth are also known.

In the known devices the tactile feedback is connected with the movement of the joystick itself, and not with events encountered on a display. Also, the mechanical parts require space inside the device. In case of portable devices, space is at a premium, and the fewer components that are required to be located on the inside, the better.

The present invention solves among other things the above-mentioned problems by providing a tactile sensation method and device. The device is adapted to be connected to a control device guiding a cursor on a display, such that the tactile sensation device will respond to the control device when the cursor is moved on the display. The tactile sensation device is adapted to impart vibration feels by means of a built-in vibrator.

### Summary of the invention

According to a first aspect, the invention provides a method of providing tactile feedback in a portable device comprising a display for showing images including a movable cursor, and a pointing device, the pointing device being used for inputting signals to a control device guiding the cursor on the display. In the method, a tactile sensation is generated when the cursor is moved in a direction on the display.

Preferably a vibration feel is generated.

Different vibration feels may be generated when the cursor is moved in different defined directions and speeds on the display including slow and quick vibrations, and vibrations with different durations in predefined patterns.

The different defined directions should include up, down, to the left and to the right and any possible movement of the cursor.

Also a vibration feel may be generated when the cursor is moved over a defined area on the display and different vibration feels may be generated when the cursor is moved over different defined areas on the display.

Said different vibration feels should include slow and quick vibration, and vibrations with different durations in predefined patterns.

In one embodiment, a click sound is generated simultaneously with a vibration feel having a short duration and a buzzing sound is generated simultaneously with a vibration feel having an associated duration.

In a further embodiment, a visual signal is generated simultaneously with a vibration feel. Preferably, a short flash is generated simultaneously with a vibration feel having a short duration, and a scintillating signal is generated simultaneously with a vibration feel having an associated duration. Suitably, a slow scintillating signal is associated with a slow vibration, and a fast scintillating signal is associated with a fast vibration.

The visual signal may be generated by means of a background light of the display and/or keypad.

The visual signal may also be generated by changing the appearance of the cursor, including changing the size and/or shape and/or intensity and/or colour of the cursor.

According to a second aspect, the invention provides a device for providing a tactile sensation in connection with a pointing device, the pointing device being used for inputting signals to a control device guiding a cursor on a display. The tactile sensation device comprises a vibrator adapted to be controlled by the control device.

Preferably, the vibrator is capable of vibrating in different ways, resulting in different vibration feels.

Said different vibration feels should include slow and quick vibrations, and vibrations with different durations in predefined patterns.

In one embodiment, the vibrator comprises a controllable motor having a flywheel with an eccentrically suspended mass.

According to a third aspect, the invention provides a portable device comprising a display for showing images including a movable cursor, and a pointing device, the pointing device being used for inputting signals to a control device guiding the cursor on the display. The portable device comprises a device for providing a tactile sensation in connection with the pointing device, wherein the tactile sensation device comprises a vibrator adapted to be controlled by the control device.

Preferably, the vibrator is capable of vibrating in different ways, resulting in different vibration feels.

In one embodiment, the vibrator is adapted to generate different vibration feels when the cursor is moved in different defined directions and speeds on the display.

Said different vibration feels should include slow and quick vibrations, and vibrations with different durations in predefined patterns.

Suitably, said different defined directions include up, down, to the left and to the right and any possible movement of the cursor.

Also, the vibrator may be adapted to generate a vibration feel when the cursor is moved over a defined area on the display, and the vibrator may be adapted to generate different vibration feels when the cursor is moved over different defined areas on the display.

Preferably, said different vibration feels include slow and quick vibration, and vibrations with different durations in predefined patterns.

In a further embodiment, the portable device further comprises a sound generator adapted to generate a click sound simultaneous with a vibration feel having a short duration and a buzzing sound simultaneous with a vibration feel having an associated duration.

In a still further embodiment, the portable device further comprises light emitting means adapted to generate a visual signal together with a vibration feel. Preferably, the light emitting means is adapted to generate a short flash simultaneous with a vibration feel having a short duration, and a scintillating signal simultaneous with a vibration feel having an associated duration. Suitably, a slow scintillating signal is associated with a slow vibration, and a fast scintillating signal is associated with a fast vibration.

The light emitting means may comprise light emitting diodes (LEDs) or electroluminescent lamps located behind the display and/or keys.

In one embodiment, the control device is adapted to generate the visual signal by changing the appearance of the cursor, including changing the size and/or shape and/or intensity and/or colour of the cursor.

In one embodiment, the vibrator comprises a controllable motor having a flywheel with an eccentrically suspended mass.

The portable device may be a mobile radio terminal, e.g. a mobile telephone, a pager, a communicator, an electric organiser or a smartphone.

### Brief description of the drawings

The invention will be described in detail below with reference to the accompanying drawings, in which:
fig. 1 is general view of a mobile telephone incorporating an embodiment of the invention, and
fig. 2 is a view of a possible menu according to the invention.

### Detailed description of preferred embodiments

As mentioned in the introduction, the invention relates to a tactile sensation method and device in connection with portable equipment such as mobile telephones.

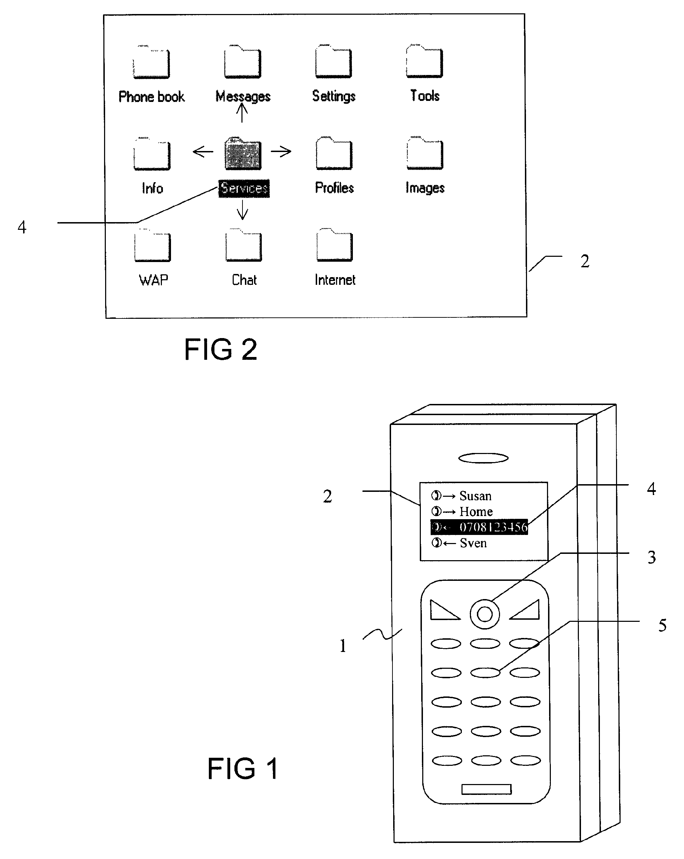

A typical mobile telephone is shown in fig. 1. The mobile telephone 1 is provided with a display 2, a keypad with keys 5 and a navigation or pointing device 3 comprising a joy stick or a ball member, used for navigating back and forth in menus shown on the display 2. Other possible navigation devices include keypad buttons, barrel keys, disc keys, roll keys, touch screens, and touch pads. The stick or ball is moved by a finger. The pointing device supplies electric signals to a control device in the mobile telephone controlling events on the display, particularly movement of a cursor 4 up and down, and left and right. The control device also controls the various feedback devices according to the present invention.

The display generally displays symbols such as alphanumeric characters, icons and pictures, all here referred to as images.

In portable devices the cursor is often shown as an area where the colours of the background and the signs have been reversed as shown at 4 in figure 1. The cursor in this image can only be moved up or down. Cursors in the shape of arrows and vertical lines and various other symbols are also possible.

In figure 2, another display 2 is shown having rows and columns of icons and texts, the cursor 4 being positioned at the icon with text "Services". This cursor can be moved up, down, left and right. In a general case, for instance when playing a game displayed on the display, the cursor can be moved in any direction, only limited by the game software and the design of the navigation device.

The speed of the cursor movement may also be controlled by pressing harder or keeping the pointing device depressed for a longer period. The harder or longer the pointing device is depressed, the faster the cursor is moving relative to the menu shown on the display.

A problem with this type of input device is the lack of tactile feedback for the user. The user gets no feedback to this finger or hand from what his eyes can see when moving the cursor. This can make it difficult for the user to position the cursor while scrolling in the menu.

The idea according to one embodiment of the invention is to use a vibrator to create a vibration or mechanical impulse imparted to the user holding the device. This will give the user a feeling of a tactile feedback. The impulse should give the user a feeling of a vibration as the cursor is moved over the screen. If the portable device is e.g. a mobile telephone, it often is provided with a vibrator used on connection with ring signals and other sound signals, and suitably this vibrator is also used to provide the tactile feedback.

As is known in the art, a vibrator may comprise a controllable motor having a flywheel with an eccentrically suspended mass. The vibrator (not shown) is located inside the portable device and mechanically connected to the outer shell of the device so that a person holding the device can feel the vibration. Preferably, it should be possible to control the operation of the motor so that it can vibrate slowly and quickly, accelerate between slowly and quickly, and also to switch it off and on rapidly in accordance with a predetermined sequence or pattern. This pattern can be achieved by supplying the motor with a square wave of which the on and off periods have appropriate lengths. Such a pattern provides an intermittent vibration, in other words, with brief pauses. A very short and quick single vibration, e.g. less than 0.5 seconds, may be experienced as a "click" feel. All these different operation modes of the vibrator give a different vibration feel to the user.

The vibrator is electrically controlled by a control means included in the mobile telephone. The control means is in turn responding to the pointing device. Since the tactile feedback is electrically controlled, several different types of feedback are possible in accordance with the different operation modes of the vibrator as the cursor is moved in various directions and speeds in a menu. This may also be exploited e.g. in games when the cursor is moved over a "forbidden" area.

Below is a table of possible vibrations linked to movements:

| **Movement** | **Vibration** |
|---|---|
| Up (normal speed) | Slow |
| Down (normal speed) | Fast |
| Left (normal speed) | Slow, intermittent (with short pauses) |
| Right (normal speed) | Fast, intermittent |
| Up (fast speed) | Slow + 25% speed |
| Down (fast speed) | Fast + 25% speed |
| Left (fast speed) | Slow + 25% speed, intermittent |
| Right (fast speed) | Fast + 25% speed, intermittent |

It is possible to combine the different vibration feels with sounds. In this case the conventional speaker system of the portable device is controlled by the control device to generate click sounds in connection with the click feel and e.g. different buzzing sounds or tones in combination with the vibration feels. Suitably, a click feel is coupled with a click sound and a vibration feel is coupled with a buzzing sound having an associated usually longer duration.

It is also possible to combine the different vibration feels with visual signals. In this case the portable device is controlled by the control device to generate flashing or scintillating signals in addition to the vibration feels, preferably in conjunction with the sound signals. For example, flash signals are generated in connection with the click feels and e.g. different scintillating or intermittently flashing signals in combination with the vibration feels having associated usually longer durations. The speed of the scintillations should correspond to the speed of the vibrations, that is a slow vibration is associated with a slow scintillation and fast vibration is associated with a fast scintillation.

There are different ways to obtain the visual signals. In one embodiment the background lighting of the display and/or the keypad is used. The control device energises the light emitting diodes (LEDs) or electroluminescent lamps located behind the display and/or keys 5 as the case may be.

In another embodiment the appearance of the cursor itself is changed. For example, the intensity or darkness of the cursor symbol can be changed, flashing it on and off. Also the shape and size of the cursor symbol can be changed back and forth in a cyclic manner. If the display is a colour display, the colour of the symbol can be changed. For example, the symbol could turn into red when moving to the left, green when moving to the right, yellow when moving up and blue when moving down. Different colours of the cursor may be associated with different areas on the display, e.g. in games.

The invention provides several advantages over the prior art. The user will get a tactile feedback, i.e. a physical sensation, in his hand or fingers when moving the cursor on the display. This will make it much easier to move the cursor on the display, like scrolling in a menu, when the user can feel the movement for each new step. The possibility of using several different types of vibrations is extra useful for games. By using the built-in vibrator of the portable device no extra space and no extra components are needed for the tactile device. Also, the tactile feedback may be enhanced by combining with sounds and visible signals providing audible and visual feedback as well.

Although one embodiment of the invention is described in detail, it should be appreciated by a person skilled in the art that many variations are possible. E.g. the specific design of the vibrator mechanism may be varied without departing from the scope of the invention as defined in the claims. The invention may be applied in all kinds of devices having a menu with a pointing device and is especially useful in portable devices, like portable radio communication equipment, such as mobile radio terminals, mobile telephones, pagers, communicators, electronic organisers and smartphones.

## Claims

1. A method of providing tactile feedback in a portable device (1) comprising a display (2) for showing images including a movable cursor (4), and a pointing device (3), the pointing device being used for inputting signals to a control device guiding the cursor (4) on the display (2), **characterised in that** a tactile sensation is generated when the cursor (4) is moved in a defined direction on the display (2).

2. A method according to claim 1, **characterised in that** a vibration feel is generated.

3. A method according to claim 2, **characterised in that** different vibration feels are generated when the cursor (4) is moved in different defined directions and/or speeds on the display (2).

4. A method according to claim 3, **characterised in that** said different vibration feels include slow and quick vibrations, and vibrations with different durations in predefined patterns.

5. A method according to claim 4, **characterised in that** said different defined directions include up, down, to the left and to the right.

6. A method according to claim 5, **characterised in that** said different defined directions further include any possible movement of the cursor (4).

7. A method according to any one of claims 1 to 6, **characterised in that** a vibration feel is generated when the cursor (4) is moved over a defined area on the display (2).

8. A method according to claim 7, **characterised in that** different vibration feels are generated when the cursor (4) is moved over different defined areas on the display (2).

9. A method according to claim 8, **characterised in that** said different vibration feels include slow and quick vibration, and vibrations with different durations in predefined patterns.

10. A method according to any one of claims 1 to 9, **characterised in that** a click sound is generated simultaneously with a vibration feel having a short duration.

11. A method according to any one of claims 1 to 9, **characterised in that** a buzzing sound is generated simultaneously with a vibration feel having an associated duration.

12. A method according to any one of claims 1 to 11, **characterised in that** a visual signal is generated simultaneously with a vibration feel.

13. A method according to claims 12, **characterised in that** the visual signal is a short flash generated simultaneously with a vibration feel having a short duration.

14. A method according to claims 12 or 13, **characterised in that** the visual signal is a scintillating signal generated simultaneously with a vibration feel having an associated duration.

15. A method according to claims 14, **characterised in that** a slow scintillating signal is associated with a slow vibration, and a fast scintillating signal is associated with a fast vibration.

16. A method according to any one of claims 12 to 15, **characterised in that** the visual signal is generated by means of a background light of the display (2) and/or keys (5).

17. A method according to any one of claims 12 to 16, **characterised in that** the visual signal is generated by changing the appearance of the cursor (4).

18. A method according to claims 17, **characterised in that** the appearance is changed by changing the size and/or shape and/or intensity and/or colour of the cursor (4).

19. A device for providing a tactile sensation in connection with a pointing device (3), the pointing device being used for inputting signals to a control device guiding a cursor (4) on a display (2), **characterised in that** the tactile sensation device comprises a vibrator adapted to be controlled by the control device.

20. A tactile sensation device according to claim 19, **characterised in that** the vibrator is capable of vibrating in different ways, resulting in different vibration feels.

21. A tactile sensation device according to claim 20, **characterised in that** said different vibration feels include slow and quick vibrations, and vibrations with different durations in predefined patterns.

22. A tactile sensation device according to any one of claims 19 to 21, **characterised in that** the vibrator comprises a controllable motor having a flywheel with an eccentrically suspended mass.

23. A portable device (1) comprising a display (2) for showing images including a movable cursor (4), and a pointing device (3), the pointing device being used for inputting signals to a control device guiding the cursor (4) on the display (2), **characterised by** a device for providing a tactile sensation in connection with the pointing device (3), wherein the tactile sensation device comprises a vibrator adapted to be controlled by the control device.

24. A portable device (1) according to claim 23, **characterised in that** the vibrator is capable of vibrating in different ways, resulting in different vibration feels.

25. A portable device (1) according to claim 24, **characterised in that** the vibrator is adapted to generate different vibration feels when the cursor (4) is moved in different defined directions and/or speeds on the display (2).

26. A portable device (1) according to claim 24 or 25, **characterised in that** said different vibration feels include slow and quick vibrations, and vibrations with different durations in predefined patterns.

27. A portable device (1) according to claim 25 or 26, **characterised in that** said different defined directions include up, down, to the left and to the right.

28. A portable device (1) according to claim 27, **characterised in that** said different defined directions further include any possible movement of the cursor (4).

29. A portable device (1) according to any one of claims 23 to 28, **characterised in that** the vibrator is adapted to generate a vibration feel when the cursor (4) is moved over a defined area on the display (2).

30. A portable device (1) according to claim 29, **characterised in that** the vibrator is adapted to generate different vibration feels when the cursor (4) is moved over different defined areas on the display (2).

31. A portable device (1) according to claim 30, **characterised in that** said different vibration feels include slow and quick vibration, and vibrations with different durations in predefined patterns.

32. A portable device according to any one of claims 23 to 31, **characterised in that** the portable device (1) further comprises a sound generator adapted to generate a click sound simultaneous with a vibration feel having a short duration.

33. A portable device according to any one of claims 23 to 32, **characterised in that** the portable device (1) further comprises a sound generator adapted to generate a buzzing sound simultaneous with a vibration feel having an associated duration.

34. A portable device according to any one of claims 23 to 33, **characterised in that** the portable device (1) further comprises light emitting means adapted to generate a visual signal in together with a vibration feel.

35. A portable device (1) according to claim 34, **characterised in that** the light emitting means is adapted to generate a short flash simultaneous with a vibration feel having a short duration.

36. A portable device (1) according to claim 34 or 35, **characterised in that** the light emitting means is adapted to generate a scintillating signal simultaneous with a vibration feel having an associated duration.

37. A portable device (1) according to claim 36, **characterised in that** the light emitting means is adapted to associate a slow scintillating signal with a slow vibration, and a fast scintillating signal with a fast vibration.

38. A portable device according to any one of claims 34 to 37, **characterised in that** the light emitting means comprises light emitting diodes (LEDs) or electroluminescent lamps located behind the display and/or keys (5).

39. A portable device according to any one of claims 23 to 33, **characterised in that** the control device is adapted to change the appearance of the cursor (4) in order to generate a visual signal in together with a vibration feel.

40. A portable device (1) according to claim 39, **characterised in that** the appearance is changed by changing the size and/or shape and/or intensity and/or colour of the cursor (4).

41. A portable device according to any one of claims 23 to 40, **characterised in that** the vibrator comprises a controllable motor having a flywheel with an eccentrically suspended mass.

42. A portable device according to any one of claims 23 to 41, **characterised in that** the portable device (1) is a mobile radio terminal, e.g. a mobile telephone, a pager, a communicator, an electric organiser or a smartphone.
